# EUROPÄISCHE PATENTSCHRIFT

(11) **EP 2 335 452 B1**
(45) Veröffentlichungstag und Bekanntmachung des Hinweises auf die Patenterteilung: **10.02.2016**
(21) Anmeldenummer: 09748060.2
(22) Anmeldetag: 13.10.2009
(51) Int. Cl.: H05B 3/84, B60S 1/02

(54) **TRANSPARENTER GEGENSTAND MIT EINEM ÖRTLICH BEGRENZTEN, STRUKTURIERTEN, ELEKTRISCH BEHEIZBAREN, TRANSPARENTEN BEREICH, VERFAHREN ZU SEINER HERSTELLUNG UND SEINE VERWENDUNG**
TRANSPARENT OBJECT WITH A LOCALLY LIMITED, STRUCTURED, ELECTRICALLY HEATABLE TRANSPARENT AREA, METHOD FOR THE MANUFACTURE THEREOF AND USE THEREOF
OBJET TRANSPARENT PRÉSENTANT UNE ZONE TRANSPARENTE POUVANT ÊTRE CHAUFFÉE ÉLECTRIQUEMENT, STRUCTURÉE, DÉLIMITÉE LOCALEMENT, PROCÉDÉ POUR SA PRODUCTION, ET SON UTILISATION

(30) Priorität: 15.10.2008 DE 102008051730
(43) Veröffentlichungstag der Anmeldung: 22.06.2011
(73) Patentinhaber: Saint-Gobain Glass France, 92400 Courbevoie (FR)
(72) Erfinder: RATEICZAK, Mitja, 52146 Würselen (DE)
(74) Vertreter: Lendvai, Tomas
(86) Internationale Anmeldenummer: PCT/EP2009/063309
(87) Internationale Veröffentlichungsnummer: WO 2010/043598

(56) Entgegenhaltungen:
- EP-A2- 1 168 888
- EP-A2- 1 605 729
- WO-A2-03/024155
- WO-A2-2004/051869
- GB-A- 2 381 179

## Beschreibung

Die vorliegende Erfindung betrifft einen neuen transparenten Gegenstand, umfassend ein transparentes, elektrisch isolierendes Substrat mit einer großflächigen, strukturierten, elektrisch leitfähigen, transparenten Beschichtung, enthaltend mindestens einen örtlich begrenzten, strukturierten, elektrisch beheizbaren, transparenten Bereich.

Außerdem betrifft die vorliegende Erfindung ein neues Verfahren zur Herstellung eines transparenten Gegenstands, umfassend ein transparentes Substrat mit einer großflächigen, strukturierten, elektrisch leitfähigen, transparenten Beschichtung, enthaltend mindestens einen örtlich begrenzten, strukturierten, elektrisch beheizbaren, transparenten Bereich.

Nicht zuletzt betrifft die vorliegende Erfindung die neue Verwendung des neuen transparenten Gegenstands, umfassend ein transparentes, elektrisch isolierendes Substrat mit einer großflächigen, strukturierten, elektrisch leitfähigen, transparenten Beschichtung, enthaltend mindestens einen örtlich begrenzten, strukturierten, elektrisch beheizbaren, transparenten Bereich, sowie des mithilfe des neuen Verfahrens hergestellten transparenten Gegenstands, umfassend ein transparentes Substrat mit einer großflächigen, strukturierten, elektrisch leitfähigen, transparenten Beschichtung, enthaltend mindestens einen örtlich begrenzten, strukturierten, elektrisch beheizbaren, transparenten Bereich.

Verbundsicherheitsglasscheiben, insbesondere Windschutzscheiben, für Kraftfahrzeuge, die elektrisch leitfähige, transparente Schichten enthalten, und Verfahren zu ihrer Herstellung sind beispielsweise aus den Patentanmeldungen und Patentschriften US 4,010,304, US 4,385,226, US 4,565,719, US 4,655,811, US 4,725,710, US 4,985,312, US5,111,329, US 5,324,374, EP 0 638 528 A1, EP 0 718 250 A2, DE 697 31 268 T2, WO 00/72635 A1 und US 7,223,940 B2 bekannt. Die elektrisch leitfähigen, transparenten Schichten können der vollflächigen Beheizung der Verbundsicherheitsglasscheiben oder als IR-Strahlung reflektierende oder absorbierende Schichten dienen.

Im Allgemeinen wird für die vollflächige Beheizung von Verbundsicherheitsglasscheiben für Kraftfahrzeuge eine Spannung von 42 V benötigt. Indes beträgt die Bordspannung bei den allermeisten Kraftfahrzeugmodellen nur 12 bis 14 V, so dass zusätzliche Maßnahmen, wie zum Beispiel der Einbau zusätzlicher elektrischer und elektronischer Bauteile, ergriffen werden müssen, um die Beheizbarkeit zu gewährleisten. Dies bringt aber einen unerwünschten zusätzlichen Aufwand bei der Herstellung der Kraftfahrzeuge und damit höhere Kosten mit sich. Häufig ist es auch so, dass in den Karosserien kein Platz mehr für zusätzliche Bauteile zur Verfügung steht.

Moderne Windschutzscheiben für Kraftfahrzeuge weisen häufig so genannte Kamera- oder Sensorfelder auf, durch die eine Kamera oder ein Sensor durch die Windschutzscheibe "hindurch blickt". Diese Felder müssen stets frei von Beschlag durch Wasser oder Eis gehalten werden, damit die Kameras und die Sensoren ihre Funktion erfüllen können. Um die Felder beschlagfrei zu halten, können Leiterbahnen zur elektrischen Beheizung eingearbeitet werden. Diese Leiterbahnen können zwar mit einer Bordspannung von 12 bis 14 V betrieben werden, sie können aber unerwünschte Abschattungen hervorrufen.

Aus der Patentanmeldung WO 00/72635 A1 ist eine elektrisch vollflächig beheizbare Windschutzscheibe bekannt, die ein Fenster enthält, das frei von der elektrisch leitfähigen Beschichtung ist. Dieses Fenster dient der Datenübertragung durch die Windschutzscheibe hindurch. Allerdings ist dieses Fenster nicht beheizbar und daher nur schwer oder gar nicht beschlagfrei zu halten.

Die Patentanmeldung WO 2004/051869 A2 offenbart eine Fensterscheibe mit einer transparenten, elektrisch beheizbaren Beschichtung. Um die Datenübertragung zu ermöglichen weist die Beschichtung einen örtlich begrenzten, strukturierten Bereich auf, der durch entschichtete parallele Linien ausgebildet ist.

Der vorliegenden Erfindung liegt die Aufgabe zu Grunde, die Nachteile des Standes der Technik zu beheben und neue transparente Gegenstände, insbesondere neue Verbundsicherheitsglasscheiben, speziell neue Windschutzscheiben, zur Verfügung zu stellen, die mit einer transparenten Beschichtung aus einem elektrisch leitfähigen Material beschichtet sind, worin sich mindestens ein örtlich begrenzter, elektrisch beheizbarer, transparenter Bereich, insbesondere ein Kamera- oder Sensorfeld, befindet. Dieser transparente Bereich soll mit einer vergleichsweise niedrigen Spannung, insbesondere einer Spannung von 12 bis 14 V, beheizbar sein und keine unerwünschten Abschattungen hervorrufen. Außerdem sollen keine zusätzlichen Maßnahmen, wie der Einbau von zusätzlichen elektrischen und elektronischen Bauteilen, notwendig sein. Die elektrisch beheizbaren, transparenten Bereiche sollen auch im Winterbetrieb oder Kältebetrieb rasch von einem Beschlag aus Feuchtigkeit und Eis befreit und zuverlässig beschlagfrei gehalten werden können.

Außerdem ist es die Aufgabe der vorliegenden Erfindung ein neues Verfahren zur Herstellung von transparenten Gegenständen, insbesondere Verbundsichertieitsglasscheiben, speziell Windschutzscheiben, zur Verfügung zu stellen, das die Nachteile des Standes der Technik nicht mehr länger aufweist, sondern in einfacher und sehr gut reproduzierbarer Weise in hohen Stückzahlen transparente Gegenstände liefert, die eine transparente Beschichtung aus einem elektrisch leitfähigen Material aufweisen, wobei sich in der Beschichtung mindestens ein transparenter, mit vergleichsweise niedriger Spannung elektrisch beheizbarer Bereich, insbesondere ein Kamera- oder Sensorfeld, befindet. Der mithilfe des neuen Verfahrens hergestellte transparente, elektrisch beheizbare Bereich soll auch ohne zusätzliche elektrische und elektronische Bauteile voll funktionsfähig sein. Die elektrisch beheizbaren, transparenten Bereiche sollen auch im Winterbetrieb oder Kältebetrieb rasch von einem Beschlag aus Feuchtigkeit und Eis befreit und zuverlässig beschlagfrei gehalten werden können und keine Abschattungen mehr hervorrufen.

Nicht zuletzt lag der vorliegenden Erfindung die Aufgabe zu Grunde, eine neue Verwendung für die neuen transparenten Gegenstände und die Mithilfe des neuen Verfahrens hergestellten transparenten Gegenstände in Fortbewegungsmitteln für den Verkehr zu Lande, zur Luft und zu Wasser sowie im Bau-, Möbel- und Gerätesektor zu finden, wobei es bei der neuen Verwendung insbesondere darauf ankommen soll, dass die betreffenden transparenten Gegenstände in örtlich begrenzten, transparenten Bereichen auch im Winterbetrieb oder Kältebetrieb rasch von einem Beschlag aus Feuchtigkeit und Eis befreit und zuverlässig beschlagfrei gehalten werden können und keine Abschattungen mehr hervorrufen.

Demgemäß wurde der neue transparente Gegenstand gefunden, der
- mindestens ein transparentes, elektrisch isolierendes Substrat (1),
- eine strukturierte, transparente Beschichtung (2), die
   - mindestens ein elektrisch leitfähiges Material (2.1) enthält oder hieraus besteht,
   - das transparente Substrat (1) großflächig bedeckt,
   - eine Struktur, die von von elektrisch leitfähigem Material (2.1) freien, elektrisch isolierenden Bereichen (2.2) gebildet ist, aufweist und
   - mindestens einen örtlich begrenzten, strukturierten, elektrisch beheizbaren, transparenten Bereich (2.3) und
   - mindestens einen elektrisch leitfähigen, transparenten Bereich (2.4)
      umfasst, sowie
- elektrische Kontakte (3) zum Anlegen einer elektrischen Spannung an die Beschichtung (2) umfasst, wobei
- die Beschichtung (2) derart strukturiert und die elektrischen Kontakte (3) derart angeschlossen sind, dass bei Anlegen einer Spannung zumindest durch den Bereich (2.3) ein Strom fließt, wobei der Bereich (2.3) die Struktur einer mäanderförmigen Leiterbahn hat.

Im Folgenden wird der neue transparente Gegenstand, der mindestens ein Substrat (1), eine Beschichtung (2) und elektrische Kontakte (3) umfasst, als »erfindungsgemäßer Gegenstand« bezeichnet.

Außerdem wurde das neue Verfahren zur Herstellung des erfindungsgemäßen transparenten Gegenstands gefunden, bei dem man
(I) ein elektrisch leitfähiges Material (2.1) großflächig auf ein transparentes, elektrisch isolierendes Substrat (1) appliziert, so dass eine transparente, elektrisch leitfähige Beschichtung (2) resultiert, die das Material (2.1) enthält oder hieraus besteht,
(II) die Beschichtung (2) strukturiert, indem man sie stellenweise entfernt, so dass elektrisch isolierende Bereiche (2.2) resultieren, die frei von elektrisch leitfähigem Material (2.1) sind, und
(III) die strukturierte Beschichtung (2) mit elektrischen Kontakten (3) verbindet,
   wobei die Strukturierung (II) derart erfolgt, dass
   - die strukturierte Beschichtung (2) mindestens einen örtlich begrenzten, strukturierten, elektrisch beheizbaren, transparenten Bereich (2.3) und mindestens einen elektrisch leitfähigen, transparenten Bereich (2.4) aufweist und
   - bei Anlegen einer elektrischen Spannung zumindest durch den Bereich (2.3) ein Strom fließt.

Im Folgenden wird das neue Verfahren zur Herstellung eines transparenten Gegenstandes als »erfindungsgemäßes Verfahren« bezeichnet.

Nicht zuletzt wurde die neue Verwendung des erfindungsgemäßen Gegenstands und des mithilfe des neuen Verfahrens hergestellten transparenten Gegenstandes in Fortbewegungsmitteln für den Verkehr zu Lande, zur Luft und zu Wasser sowie im Bau-, Möbel- und Gerätesektor gefunden, was im Folgenden als »erfindungsgemäße Verwendung« bezeichnet wird.

Im Hinblick auf den Stand der Technik war es überraschend und für den Fachmann nicht vorhersehbar, dass die Aufgabe, die der vorliegenden Erfindung zugrunde lag, mithilfe des erfindungsgemäßen Gegenstands, des erfindungsgemäßen Verfahrens und der erfindungsgemäßen Verwendung gelöst werden konnte.

Insbesondere war es überraschend, dass der erfindungsgemäße Gegenstand die Nachteile des Standes der Technik nicht mehr länger aufwies, sondern dass der mindestens eine örtlich begrenzte, elektrisch beheizbare, transparente Bereich, insbesondere ein Kamera- oder Sensorfeld, der strukturierten, transparenten Beschichtung mit einer vergleichsweise niedrigen Spannung, insbesondere einer Spannung von 12 bis 14 V, beheizbar war und keine unerwünschten Abschattungen hervorrief. Außerdem waren keine zusätzlichen Maßnahmen, wie der Einbau von zusätzlichen elektrischen und elektronischen Bauteilen, notwendig. Der elektrisch beheizbare, transparente Bereich konnte auch im Winterbetrieb oder im Kältebetrieb rasch von einem Beschlag aus Feuchtigkeit und Eis befreit und zuverlässig beschlagfrei gehalten werden.
Außerdem war es überraschend, dass das erfindungsgemäße Verfahren ebenfalls die Nachteile des Standes der Technik nicht mehr länger aufwies, sondern in einfacher und sehr gut reproduzierbarer Weise in hohen Stückzahlen transparente Gegenstände lieferte, die eine strukturierte, transparente Beschichtung aufwiesen, wobei sich in der Beschichtung mindestens ein transparenter, mit vergleichsweise niedriger Spannung elektrisch beheizbarer Bereich, insbesondere ein Kamera- und der Sensorfeld, ohne unerwünschte Abschattungen befand. Die mithilfe des neuen Verfahrens hergestellten transparenten, elektrisch beheizbaren Bereiche waren auch ohne zusätzliche elektrische und elektronische Bauteile voll funktionsfähig. Die elektrisch beheizbaren, transparenten Bereiche konnten auch im Winterbetrieb oder Kältebetrieb rasch von einem Beschlag aus Feuchtigkeit und Eis befreit und zuverlässig beschlagfrei gehalten werden.

Nicht zuletzt war es überraschend, dass die erfindungsgemäßen Gegenstände und die mithilfe des erfindungsgemäßen Verfahrens hergestellten transparenten Gegenstände im Rahmen der erfindungsgemäßen Verwendung hervorragend für den Einsatz in Fortbewegungsmitteln für den Verkehr zu Lande, zur Luft und zu Wasser sowie im Bau-, Möbel- und Gerätesektor geeignet waren. Dabei konnten die erfindungsgemäßen Gegenstände und die nach dem erfindungsgemäßen Verfahren hergestellten transparenten Gegenstände in örtlich begrenzten, elektrisch beheizbaren, von unerwünschten Abschattungen freien, transparenten Bereichen auch im Winterbetrieb oder Kältebetrieb rasch von einem Beschlag aus Feuchtigkeit und Eis befreit und zuverlässig beschlagfrei gehalten werden.

Die erfindungsgemäßen Gegenstände sind transparent. Dies bedeutet, dass sie zumindest in einzelnen Bereichen, vorzugsweise aber insgesamt, für elektromagnetische Strahlung, vorzugsweise elektromagnetische Strahlung einer Wellenlänge von 300 bis 1.300 nm, insbesondere aber für sichtbares Licht, durchlässig sind. »Durchlässig« bedeutet, dass die Transmission insbesondere für sichtbares Licht >50%, bevorzugt >75% und insbesondere >80% ist.

Die erfindungsgemäßen Gegenstände können unterschiedliche dreidimensionale Formen haben. So können sie planar oder leicht oder stark in einer Richtung oder mehreren Richtungen gebogen oder gekrümmt sein oder die Form regelmäßiger oder unregelmäßiger dreidimensionaler Körper, wie Kugeln, Zylinder, Kegel, Pyramiden mit dreieckiger oder viereckiger Grundfläche, Doppelpyramiden Quader, Ikosaeeder usw., haben. Insbesondere sind sie planar oder leicht oder stark in einer Richtung oder mehreren Richtungen des Raumes gebogen oder gekrümmt.

Die Größe der erfindungsgemäßen Gegenstände kann breit variieren und richtet sich nach dem jeweiligen Verwendungszweck im Rahmen der erfindungsgemäßen Verwendung. So können die erfindungsgemäßen Gegenstände eine Größenordnung von wenigen Zentimetern bis zu mehreren Metern haben. Insbesondere die planaren oder leicht oder stark in eine Richtung oder mehreren Richtungen des Raumes gebogenen oder gekrümmten Gegenstände können eine Fläche in der Größenordnung von 100 cm² bis 25 m², vorzugsweise >1 m², haben. Die Fläche kann bei diesen großflächigen erfindungsgemäßen Gegenständen die Maße Gen5 (1,1 m x 1,3 m = 1,43 m²) und Gen8,5 (2,2 m x 2,6 m = 5,72 m²), wie sie in der Display-Industrie angewandt werden, oder PLF (3,21 m x 6,0 m = 19,26 m²), was das "Bandmaß" der Glasindustrie ist, aufweisen. Die erfindungsgemäßen Gegenstände können aber auch Flächen haben, wie sie Windschutzscheiben, Seitenscheiben und Heckscheiben für Kraftfahrzeuge oder großflächige Scheiben, wie sie im Bausektor verwendet werden, üblicherweise aufweisen.

Die erfindungsgemäßen Gegenstände können Durchbrechungen aufweisen. Diese können der Aufnahme von Vorrichtungen zur Halterung, zur Verbindung mit anderen Gegenständen und/oder der Durchführung von Leitungen, insbesondere elektrischen Leitungen, dienen.

Der erfindungsgemäße Gegenstand enthält mindestens ein transparentes, elektrisch isolierendes Substrat. Vorzugsweise hat das Substrat für elektromagnetische Strahlung einer Wellenlänge von 300 bis 1.300 nm, insbesondere aber für sichtbares Licht, eine hohe Transmission, vorzugsweise eine Transmission >50%, bevorzugt >75%, besonders bevorzugt >85% und insbesondere >95%.

Demgemäß sind im Grunde alle transparenten, elektrisch isolierenden Substrate geeignet, die eine solche Transmission aufweisen und die unter den Bedingungen der Herstellung und der Verwendung der erfindungsgemäßen Gegenstände thermisch und chemisch stabil sowie dimensionsstabil sind.

Die transparenten, elektrisch isolierenden Substrate können eine beliebige dreidimensionale Form aufweisen, die durch die dreidimensionalen Formen der erfindungsgemäßen Gegenstände, die sie enthalten, vorgegeben ist. Vorzugsweise hat die dreidimensionale Form keine Schattenzonen, so dass sie insbesondere aus der Gasphase gleichmäßig beschichtet werden kann. Bevorzugt sind die Substrate planar oder leicht oder stark in einer Richtung oder in mehreren Richtungen gebogen. Insbesondere werden planare Substrate verwendet.

Die transparenten, elektrisch isolierenden Substrate können farblos oder gefärbt sein.

Beispiele geeigneter Materialien zur Herstellung transparenter, elektrisch isolierender Substrate sind Glas und klare Kunststoffe, vorzugsweise starre klare Kunststoffe, insbesondere Polystyrol, Polyamid, Polyester, Polyvinylchlorid Polycarbonat oder Polymethylmethacrylat.

Bevorzugt werden transparente, elektrisch isolierende Substrate aus Glas verwendet. Im Grunde kommen alle üblichen und bekannten Gläser, wie sie beispielsweise in Römpp-Online 2008 unter den Stichworten »Glas«, »Hartglas« oder »Sicherheitsglas« beschrieben werden, als Substratmaterial in Betracht. Beispiele gut geeigneter Gläser sind Flachglas, Hartglas, vorgespanntes Glas, Einscheiben-Sicherheitsglas, Geräteglas, Laborglas, Kristallglas und optisches Glas, insbesondere Flachglas und Hartglas.

Beispiele geeigneter Gläser sind aus der deutschen Übersetzung des europäischen Patent EP 0 847 965 B1 mit dem Aktenzeichen DE 697 31 2 168 T2, Seite 8, Absatz [0053], bekannt.

Die Dicke der transparenten, elektrisch isolierenden Substrate kann breit variieren und so hervorragend den Erfordernissen des Einzelfalls angepasst werden. Vorzugsweise werden Gläser mit den Standardglasstärken von 2, 3, 4, 5, 6, 8, 10, 12, 15, 19 und 24 mm verwendet.

Die Größe der transparenten, elektrisch isolierenden Substrate kann breit variieren und richtet sich nach der Größe der erfindungsgemäßen Gegenstände, die sie enthalten. Demgemäß werden bevorzugt die vorstehend beschriebenen Größen angewandt.
Die transparenten, elektrisch isolierenden Substrate sind mit einer strukturierten, transparenten Beschichtung beschichtet.

»Transparent« bedeutet auch hier, dass die strukturierten, transparenten Beschichtungen für elektromagnetische Strahlung, vorzugsweise elektromagnetische Strahlung einer Wellenlänge von 300 bis 1.300 nm, insbesondere aber für sichtbares Licht, durchlässig sind. »Durchlässig« bedeutet, dass die Transmission insbesondere für sichtbares Licht >50%, bevorzugt >75% und insbesondere >80% ist. Besonders bevorzugt sind strukturierte, transparenten Beschichtungen, die für IR-Strahlung undurchlässig sind, d. h., dass sie IR-Strahlung reflektieren oder absorbieren.

»Strukturiert« bedeutet, dass die transparente Beschichtung in mindestens zwei, insbesondere mindestens drei, voneinander abgegrenzte Bereiche unterteilt ist.

Die strukturierte, transparente Beschichtung enthält mindestens ein elektrisch leitfähiges Material oder besteht hieraus.

Demnach kann die strukturierte, transparente Beschichtung aus einer Schicht aus einem elektrisch leitfähigen Material oder aus mindestens zwei Schichten aus zwei unterschiedlichen elektrisch leitfähigen Materialien bestehen.

Außerdem kann die strukturierte, transparente Beschichtung aus mindestens einer Schicht aus einem elektrisch leitfähigen Material und mindestens einer Schicht aus einem transparenten, dielektrischen Material aufgebaut sein. Beispielsweise kann die strukturierte, transparente Beschichtung aus einer ersten Schicht aus einem transparenten, dielektrischen Material, einer Schicht aus einem elektrisch leitfähigen Material und einer zweiten Schicht aus dem gleichen oder einem anderen transparenten, dielektrischen Material bestehen, die in der angegebenen Reihenfolge übereinander liegen. Es ist aber auch möglich, dass die strukturierte, transparente Beschichtung aus mindestens drei transparenten, dielektrischen Schichten und mindestens zwei elektrisch leitfähigen Schichten besteht, die abwechselnd übereinander liegen, wobei sich mindestens eine transparente, dielektrischen Schicht zwischen den elektrisch leitfähigen Schichten befindet.

Beispiele geeigneter elektrisch leitfähiger Materialien sind Metalle mit hoher elektrischer Leitfähigkeit, wie Silber, Kupfer, Gold, Aluminium oder Molybdän, insbesondere Silber oder mit Palladium legiertes Silber, sowie transparente, elektrisch leitfähige Oxide (Transparent Conductive Oxides, TCO), wie sie beispielsweise in der amerikanischen Patentanmeldung US 2007/029186 A1 auf Seite 3, Absatz [0026], und Seite 4, Absatz [0034], beschrieben werden.

Vorzugsweise handelt es sich bei den TCO um Indiumzinnoxid (Indium Tin Oxide, ITO), fluordotiertes Zinndioxid (Fluor Tin Oxide, FTO), mit Aluminium sowie gegebenenfalls zusätzlich mit Bor und/oder mit Silber dotiertes Aluminiumzinkoxid (Aluminium Zink Oxide, AZO), Zinnzinkoxid oder mit Antimon dotiertes Zinndioxid (Antimony Tin Oxide, ATO). Vorzugsweise haben die TCO einen spezifischen Widerstand p von 1,0 bis 5,0 x 10⁻³ Ω x m. Bevorzugt haben sie einen Flächenwiderstand R_{□} von 0,5 Ω/□bis 15 Ω/□.

Die Dicke der strukturierten, transparenten Beschichtung kann breit variieren und so hervorragend den Erfordernissen des Einzelfalls angepasst werden. Wesentlich ist dabei, dass die Dicke der strukturierten, transparente Beschichtung nicht so hoch werden darf, dass sie für elektromagnetische Strahlung, vorzugsweise elektromagnetische Strahlung einer Wellenlänge von 300 bis 1.300 nm und insbesondere sichtbares Licht, undurchlässig wird.

Vorzugsweise liegt die Dicke bei 20 nm bis 100 µm.

Besteht die strukturierte, transparente Beschichtung aus einem Metall, beträgt ihre Dicke vorzugsweise 50 bis 500 nm, bevorzugt 75 bis 400 nm und insbesondere 100 bis 300 nm.

Besteht die strukturierte, transparente Beschichtung aus einem TCO, beträgt ihre Dicke vorzugsweise 100 nm bis 1,5 µm, bevorzugt 150 nm bis 1 µm und insbesondere 200 nm bis 500 nm.

Besteht die strukturierte, transparente Beschichtung aus mindestens einer transparenten, dielektrischen Schicht und mindestens einer Schicht aus einem Metall, beträgt ihre Dicke vorzugsweise 20 bis 100 µm, bevorzugt 25 bis 90 µm und insbesondere 30 bis 80 µm.

Beispiele transparenter Beschichtungen, die für die Herstellung der erfindungsgemäß verwendeten, strukturierten, transparenten Beschichtungen geeignet sind, sowie Verfahren zu ihrer Herstellung sind aus den Patentanmeldungen und Patentschriften
- US 4,010,304, Spalte 1, Zeile 67, bis Spalte 5, Zeile 35,
- US 4,565,719, Spalte 2, Zeile 3, bis Spalte 18, Zeile 51,
- US 4,655,811, Spalte 3, Zeile 56, bis Spalte 13, Zeile 63,
- US 4,985,312, Spalte 1, Zeile 64, bis Spalte 7, Zeile 25,
- US 5,111,329, Spalte 3, Zeile 32, bis Spalte 12,
- US 5,324,374, Spalte 2, Zeile 38, bis Spalte 6, Zeile 37,
- EP 0 638 528 A1, Seite 2, Zeile 19, bis Seite 10, Zeile 57,
- EP 0 718 250 A2, Seite 2, Zeile 42, des Seite 13, Zeile 44,
- DE 697 31 268 T2, Seite 3, Absatz [0011], bis Seite 7, Absatz [0051], Seite 8, Absatz [0060], bis Seite 13, Absatz [0091],
- WO 00/72635 A1, Seite 3, Zeile 16 bis 35, und
- US 7,223,940 B2, Spalte 5, Zeile 8, bis Spalte 6, Zeile 38,
bekannt. Außerdem kommen transparente Kunststofffolien, vorzugsweise auf der Basis von Polyamid, Polyurethan, Polyvinylchlorid, Polycarbonat und Polyvinylbutyral, insbesondere Polyurethan, die mit mindestens einem der vorstehend beschriebenen, elektrisch leitfähigen Materialien beschichtet sind, in Betracht.

Die strukturierte, transparente Beschichtung bedeckt das transparente, isolierende Substrat großflächig. Vorzugsweise sind mindestens 50%, bevorzugt mindestens 70%, besonders bevorzugt mindestens 80% und insbesondere mindestens 90% einer Oberfläche des transparenten, isolierenden Substrats von der strukturierten, transparenten Beschichtung bedeckt. Somit kann die strukturierte, transparente Beschichtung das transparente, isolierende Substrat auch vollständig bedecken.

Insbesondere im Falle der vorstehend beschriebenen planaren oder gebogenen oder gekrümmten Substrate können die strukturierten, transparenten Beschichtungen die Substrate derart bedecken, dass sie von einem elektrisch isolierenden Bereich, der frei von elektrisch leitfähigem Material ist, umgeben ist. Vorzugsweise befindet sich dieser elektrisch isolierende Bereich in den Kantenbereichen der elektrisch isolierenden, transparenten Substrate.

Die Breite des elektrisch isolierenden Bereichs kann breit variieren und daher den Erfordernissen des Einzelfalls hervorragend angepasst werden. Vorzugsweise liegt die Breite bei 0,5 bis 10 cm, bevorzugt 0,5 bis 7 cm und insbesondere 0,5 bis 5 cm.
Der elektrisch isolierende Bereich kann von einer dekorativen Beschichtung bedeckt sein.

Die strukturierte, transparente Beschichtung weist eine Struktur auf, die von elektrisch isolierenden Bereichen gebildet ist, die frei von elektrisch leitfähigem Material sind. Die Struktur umfasst mindestens einen, insbesondere einen, örtlich begrenzten, strukturierten, elektrisch beheizbaren, transparenten Bereich und mindestens einen elektrisch leitfähigen, transparenten Bereich.

»Örtlich begrenzt« bedeutet, dass der betreffende strukturierte, elektrisch beheizbare, transparente Bereich eine Fläche hat, die kleiner als die Fläche des elektrisch leitfähigen transparenten Bereichs ist.

»Strukturiert« bedeutet, dass auch der örtlich begrenzte, elektrisch beheizbare, transparente Bereich eine Struktur aufweist, die von elektrisch isolierenden Bereichen gebildet ist.

»Elektrisch beheizbar« bedeutet, dass der örtlich begrenzte, strukturierte, transparente Bereich einen so hohen elektrischen Widerstand aufweist, dass sich bei Anlegen einer elektrischen Spannung, vorzugsweise der üblicherweise in Kraftfahrzeugen verwendeten Bordspannung, insbesondere einer Spannung von 12 bis 14 V, der Bereich erhitzt.

Die Struktur des örtlich begrenzten, elektrisch beheizbaren, strukturierten, transparenten Bereichs ist im Einzelfall so ausgestaltet, dass der elektrische Widerstand nicht so hoch wird, dass der Bereich durch Überhitzung beschädigt wird und/oder die Gefahr der Verbrennung beim Berühren des Bereichs mit der bloßen Haut besteht. Vorzugsweise sind die Struktur und der elektrische Widerstand so ausgelegt, dass sich der Bereich bei Anlegen einer Spannung auf 30 bis 70°C erhitzt.

Die örtlich begrenzten, elektrisch beheizbaren, strukturierten, transparenten Bereiche können von Fall zu Fall unterschiedliche Strukturen haben, so dass sie den Erfordernissen des Einzelfalls hervorragend angepasst werden können.

Erfindungsgemäß haben die Strukturen die Form einer mäanderförmigen Leiterbahn.

Die mäanderförmigen Leiterbahnen können unterschiedliche Dimensionen aufweisen. Die Dimensionen richten sich in erster Linie nach dem jeweils verwendeten elektrisch leitfähigen Material und seiner Leitfähigkeit, seinem spezifischen elektrischen Widerstand, seinem Flächenwiderstand und der Temperatur, auf die die örtlich begrenzten, elektrisch beheizbaren, strukturierten, transparenten Bereiche erhitzt werden sollen. Der Fachmann kann daher die Dimensionen anhand seines Fachwissens gegebenenfalls unter Zuhilfenahme einiger weniger orientierender Versuche im Einzelfall festlegen.

Vorzugsweise haben die mäanderförmigen Leiterbahnen eine Breite von 0,5 mm bis 10 cm. Vorzugsweise beträgt ihre Länge 10 cm bis 6 m.
Die strukturierte, transparente Beschichtung ist an elektrische Kontakte angeschlossen. Sie ist insgesamt so strukturiert, dass beim Anlegen einer Spannung an die elektrischen Kontakte zumindest durch den örtlich begrenzten, elektrisch beheizbaren, strukturierten, transparenten Bereich ein Strom fließt.

Bei einer ersten Ausführungsform des erfindungsgemäßen Gegenstands ist der örtlich begrenzte, elektrisch beheizbare, strukturierte, transparente Bereich von dem elektrisch leitfähigen, transparenten Bereich elektrisch isoliert. Bei dieser ersten Ausführungsform braucht der elektrisch leitfähige, transparente Bereich in sich nicht weiter strukturiert zu sein.

Für die ersten Ausführungsform ist es wesentlich, dass der örtlich begrenzte, elektrisch beheizbare, strukturierte, transparente Bereich an elektrische Kontakte angeschlossen ist, so dass bei Anlegen einer Spannung ein Strom durch die vorstehend beschriebene Leiterbahn hindurch fließt. Dies kann dadurch gewährleistet werden, dass die Pole der Kontakte durch einen elektrisch isolierenden Bereich voneinander getrennt sind, so dass der Strom den Umweg über die Leiterbahn nehmen muss.

Bei einer zweiten Ausführungsform des erfindungsgemäßen Gegenstands steht der örtlich begrenzte, elektrisch beheizbare, strukturierte, transparente Bereich in elektrischem Kontakt mit dem elektrisch leitfähigen, transparenten Bereich, wobei die elektrischen Kontakte vorzugsweise außerhalb des örtlich begrenzten, elektrisch beheizbaren, strukturierten, transparenten Bereichs angeschlossen sind.

Für die zweite Ausführungsform ist es wesentlich, dass der elektrisch leitfähige, transparente Bereich pro einem vorliegenden, örtlich begrenzten, elektrisch beheizbaren, strukturierten, transparenten Bereich aus zwei Teilbereichen besteht, von denen der eine Teilbereich mit dem elektrischen Eingang des örtlich begrenzten Bereichs und der andere Teilbereich mit dem elektrischen Ausgang des örtlich begrenzten Bereichs in Kontakt steht. Dadurch ist gewährleistet, dass bei Anlegen einer elektrischen Spannung durch den örtlich begrenzten Bereich ein Strom fließt.

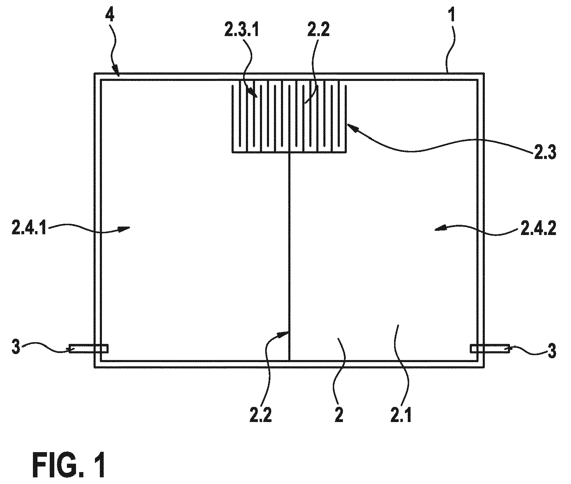

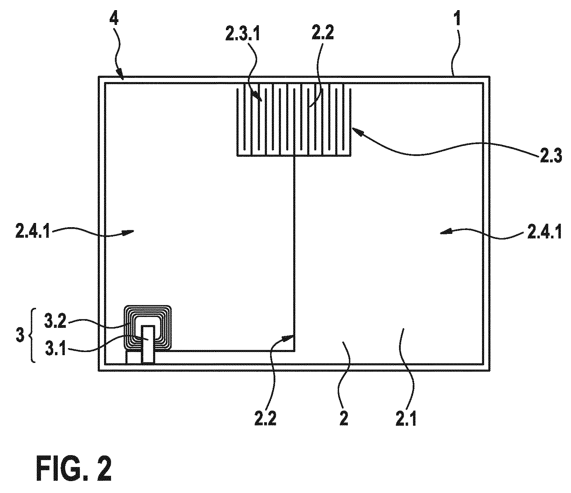

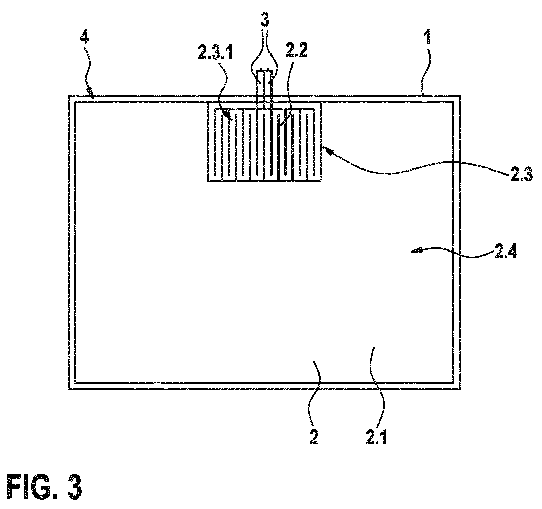

Bei den elektrischen Kontakten kann es sich um übliche und bekannte direkte Kontakte oder um induktive Kontakte, die eine Kontaktbrücke und eine Spule umfassen, handeln.
Beispiele geeigneter direkter elektrischer Kontakte, mit denen ein einwandfreier Übergang von der sehr dünnen strukturierten, transparenten Beschichtung auf die üblichen Dimensionen von Kabeln und Steckern bewerkstelligt werden kann, sind aus dem amerikanischen Patent US 7,223,940 B2, Spalte 1, Zeile 55, bis Spalte 2, Zeile 43, und Spalte 6, Zeile 48, bis Spalte 9, Zeile 59, in Verbindung mit den Figuren 1 bis 9 bekannt.

Im Falle induktiver Kontakte kann die Spule aus elektrisch isolierten, dünnen Drähten bestehen. Vorzugsweise ist die Spule aber in die strukturierte, transparente Beschichtung integriert. Dies bedeutet, dass sie Bestandteil der Struktur der transparenten Beschichtung ist und durch einen spiralförmigen, elektrisch isolierenden Bereich, der frei von elektrisch leitfähigem Material ist, gebildet wird. Zwischen den Windungen dieses spiralförmigen, elektrisch isolierenden Bereichs befindet sich die strukturierte, transparente Beschichtung in der Form einer durchgehenden Leiterbahn.

Im Falle der ersten Ausführungsform befindet sich die Spule innerhalb des örtlich begrenzten, strukturierten, elektrisch beheizbaren, transparenten Bereichs und ist hierin derart integriert, dass bei Anlegen einer Spannung der Strom den Umweg über die vorstehend beschriebene Leiterbahn nehmen muss.

Im Falle der zweiten Ausführungsform befindet sich die Spule innerhalb eines Teilbereichs des elektrisch leitfähigen, transparenten Bereichs der in elektrischem Kontakt mit dem elektrischen Ausgang oder Eingang der vorstehend beschriebenen Leiterbahn des örtlich begrenzten, strukturierten, elektrisch beheizbaren, transparenten Bereichs steht.

Die elektrische Kontaktbrücke befindet sich außerhalb der strukturierten, transparenten Beschichtung oberhalb der Spule und ragt im Falle der ersten Ausführungsform in den Bereich oberhalb des elektrischen Ausgangsbereichs der Leiterbahn. Im Falle der zweiten Ausführungsform ragt sie in den Bereich oberhalb des anderen Teilbereichs des elektrisch leitfähigen, transparenten Bereichs.

Die vorstehend beschriebene Struktur der strukturierten, transparenten Beschichtung wird von elektrisch isolierenden Bereichen gebildet, die frei von elektrisch leitfähigem Material sind. Die Dimensionen der elektrisch isolierenden Bereiche können breit variieren und können daher hervorragend den Erfordernissen des Einzelfalls angepasst werden. Vorzugsweise haben sie eine Breite von 100 nm bis 5 mm, bevorzugt 150 nm bis 5 mm, besonders bevorzugt 200 nm bis 5 mm und insbesondere 250 nm bis 5 mm.

Auch die Tiefe der elektrisch isolierenden Bereiche kann variieren und daher hervorragend den Erfordernissen des Einzelfalls angepasst werden. Wesentlich ist, dass die Bereiche kein elektrisch leitfähiges Material mehr enthalten. Vorzugsweise haben die elektrisch isolierenden Bereiche eine Tiefe, die von der Oberfläche der strukturierten, transparenten Beschichtung bis zur Oberfläche des elektrisch isolierenden, transparenten Substrats reicht.

Auch das Querschnittsprofil der elektrisch isolierenden Bereiche kann variieren und den Erfordernissen des Einzelfalls angepasst werden. Wesentlich ist dabei, dass der Abstand zwischen den Wänden der Bereiche nicht so gering wird, dass die Gefahr von Kurzschlüssen besteht. Vorzugsweise haben die elektrisch isolierenden Bereiche ein rechteckiges Querschnittsprofil.

Besteht das elektrisch isolierende, transparente Substrat aus einem Glas, kann sich zwischen seiner Oberfläche und der strukturierten, transparenten Beschichtung noch mindestens eine weitere Schicht befinden. Vorzugsweise wird die mindestens eine weitere Schicht aus der Gruppe, bestehend aus transparenten Barriereschichten und transparenten, haftvermittelnden Schichten, ausgewählt.

Geeignete transparente Barriereschichten zur Verhinderung der Diffusion von Ionen, insbesondere von Alkalimetallionen, bestehen vorzugsweise aus dielektrischen Materialien, insbesondere aus Nitriden, Oxiden und Oxinitriden von Silicium und/oder Aluminium. Vorzugsweise haben sie eine Dicke von 30 bis 300 nm.

Geeignete transparente, haftvermittelnde Schichten bestehen ebenfalls vorzugsweise aus dielektrischen Materialien, insbesondere aus gemischten Oxiden von Zink und Zinn. Vorzugsweise haben sie eine Dicke von 3 bis 100 nm.

Liegen sowohl eine transparente Barriereschicht als auch eine transparente haftvermittelnde Schicht vor, ist die transparente Barriereschicht direkt mit der Oberfläche des elektrisch isolierenden, transparenten Substrats verbunden.

Der erfindungsgemäße Gegenstand kann in der unterschiedlichsten Art und Weise hergestellt werden.

Beispielsweise kann auf das elektrisch isolierende, transparente Substrat eine Maske aufgelegt werden, die der gewünschten Struktur der elektrisch isolierenden Bereiche, die frei von elektrisch leitfähigem Material sind, entspricht. Anschließend kann mindestens ein elektrisch leitfähiges Material auf dem Substrat aus der Gasphase abgeschieden werden, wobei die nachstehend beschriebenen Verfahren verwendet werden können. Dabei entsteht direkt die vorstehend beschriebene strukturierte, transparente Beschichtung. Anschließend wird die Maske entfernt, und die strukturierte, transparente Beschichtung wird, wie nachstehend beschrieben, mit elektrischen Kontakten verbunden, so dass bei Anlegen einer Spannung zumindest durch den örtlich begrenzten, strukturierten, elektrisch beheizbaren transparenten Bereich ein Strom fließt.

Erfindungsgemäß ist es indes von Vorteil, den erfindungsgemäßen Gegenstand mithilfe des erfindungsgemäßen Verfahrens herzustellen. Seine besonderen Vorteile entfaltet das erfindungsgemäße Verfahren bei der Herstellung des erfindungsgemäßen Gegenstands.

Vor der Durchführung des ersten Verfahrenschritt kann das elektrisch isolierende, transparente Substrat thermisch behandelt, gereinigt, insbesondere entfettet, und/oder poliert werden. Anschließend kann mindestens eine der vorstehend beschriebenen Barriereschichten und/oder haftvermittelnden Schichten aufgetragen werden, wobei die nachstehend beschriebenen Verfahren zur Abscheidung dünner Schichten aus der Gasphase verwendet werden können.
Im ersten Verfahrenschritt wird mindestens ein elektrisch leitfähiges Material großflächig auf das transparente, elektrisch isolierende Substrat oder auf die Oberfläche einer hierauf befindlichen Schicht appliziert, so dass eine transparente, elektrisch leitfähige Beschichtung resultiert, die das elektrisch leitfähige Material enthält oder hieraus besteht.

Hierfür können an sich bekannte Methoden und Vorrichtungen, wie z.B. die Abscheidung aus der Gasphase, die Applikation aus der flüssigen Phase oder die Laminierung von Kunststofffolien, die mit elektrisch leitfähigen Materialien beschichtet sind, verwendet werden.

Vorzugsweise wird die transparente, elektrisch leitfähige Beschichtung aus der Gasphase abgeschieden, wobei übliche und bekannte Verfahren wie chemische Glasphasenabscheidung (CVD) oder physikalische Glasphasenabscheidung (PVD) sowie die entsprechenden hierfür geeigneten Vorrichtungen verwendet werden können. Beispiele für CVD-Verfahren sind Sprühpyrolyse, chemische Dampfabscheidung und Sol-Gel-Abscheidung. Beispiele für PVD-Verfahren sind Elektronenstrahl-Verdampfung und Vakuum-Sputtering.

Vorzugsweise werden Sputtering-Verfahren angewandt.

Sputtering ist eine übliche und bekannte Methode zur Herstellung dünner Schichten aus Materialien, die sich nicht ohne weiteres verdampfen lassen. Dabei wird die Oberfläche eines Festkörpers geeigneter Zusammensetzung, das so genannte Target, durch Beschuss mit energiereichen Ionen aus Niederdruckplasmen, wie zum Beispiel Sauerstoffionen (O⁺) und/oder Argonionen (Ar⁺), oder Neutralteilchen zerstäubt, wonach die zerstäubten Materialien auf Substraten in der Form dünner Schichten abgeschieden werden (vgl. Römpp Online, 2008, »Sputtering«). Vorzugsweise wird das Hochfrequenz-Sputtering, kurz HF-Sputtering, oder das Magnetfeld-unterstützte Sputtering, kurz Magnetron-Sputtering (MSVD), angewandt.

Geeignete Sputtering-Verfahren werden beispielsweise in den amerikanischen Patenten US 7,223,940 B2, Spalte 6, Zeilen 25 bis 38, und US 4,985,312, Spalte 4, Seite 18, bis Spalte 7, Zeile 10, oder in der deutschen Übersetzung des europäischen Patents EP 0 847 965 B1 mit dem Aktenzeichen DE 697 31 268 T2, Seite 8, Absatz [0060], und Seite 9, Absatz [0070], bis Seite 10, Absatz [0072], beschrieben.
Im zweiten Verfahrenschritt des erfindungsgemäßen Verfahrens wird die transparente, elektrisch leitfähige Beschichtung strukturiert, indem man sie stellenweise entfernt, so dass elektrisch isolierende Bereiche resultieren, die frei von elektrisch leitfähigem Material sind.

Das elektrisch leitfähige Material kann mechanisch, thermisch und/oder durch Bestrahlung mit elektromagnetischer Strahlung entfernt werden.

Ein vorteilhaftes Verfahren zur mechanischen Entfernung, das sehr präzise arbeitet und besonders feine elektrisch isolierende Bereiche liefern kann, ist das Ultraschallhämmern.

Ein vorteilhaftes Verfahren zur Entfernung durch thermische Einwirkung und/oder durch Bestrahlung mit elektromagnetischer Strahlung, das ebenfalls sehr präzise arbeitet und besonders feine elektrisch isolierende Bereiche liefern kann, ist das Bestrahlen mit einem Laserstrahl, wie dies beispielsweise in den europäischen Patentanmeldungen EP 0 827 212 A2 und EP 1 104 030 A2 beschrieben wird.

Sofern die strukturierte, transparente Beschichtung von einem elektrisch isolierenden Bereich, der frei von elektrisch leitfähige Material ist, umgeben sein soll, wird das elektrisch leitfähige Material in diesem Bereich vorzugsweise durch mechanische Verfahren wie Schleifen abgetragen.

Anschließend kann dieser elektrisch isolierende Bereich mit einer dekorativen Beschichtung versehen werden, um den Übergang von elektrisch isolierendem Bereich zu strukturierter, transparenter Beschichtung optisch zu verdecken.

Anschließend kann die strukturierte, transparente Beschichtung mit einem flüssigen oder gasförmigen, insbesondere flüssigen, Ätzmittel behandelt werden, um gegebenenfalls noch in den elektrisch isolierenden Bereichen in vorhandene Reste von elektrisch leitfähigem Material zu beseitigen.

Die flüssigen Ätzmittel werden vorzugsweise aus der Gruppe, bestehend aus flüssigen organischen Verbindungen, flüssigen anorganischen Verbindungen, Lösungen von festen, flüssigen und gasförmigen, organischen und anorganischen Verbindungen in organischen Lösemitteln und Lösungen von festen, flüssigen und gasförmigen, organischen und anorganischen Verbindungen in Wasser, ausgewählt. Bevorzugt werden Lösungen von organischen und anorganischen Säuren und Basen in Wasser verwendet. Bevorzugt werden flüchtige organische und anorganische Säuren, insbesondere anorganische Säuren, eingesetzt.

Vorzugsweise werden die strukturierten, transparenten Beschichtungen nach dem Ätzen mit einem Spülmittel wie hochreines Wasser gespült.

Anschließend können die elektrisch isolierenden, transparenten Substrate, die eine strukturierte, transparente Beschichtung aufweisen, bei höheren Temperaturen verformt, insbesondere gebogen oder gekrümmt werden.

Die Höhe der Temperaturen richtet sich nach den Materialien, aus denen die jeweiligen isolierenden, transparenten Substrate und/oder die strukturierten, transparenten Beschichtungen bestehen. Enthalten sie Kunststoff oder bestehen sie hieraus, darf die Temperatur nicht so hoch eingestellt werden, dass das Material schmilzt und/oder thermisch geschädigt wird. Vorzugsweise liegt die Temperatur in diesen Fällen oberhalb der Glasübergangstemperatur und unterhalb 200°C. Im Falle von Substraten aus Glas liegt die Temperatur zwischen 500 und 700°C, insbesondere 550 und 650°C.

Nach ihrer Herstellung wird die strukturierte, transparente Beschichtung mit elektrischen Kontakten, vorzugsweise mit den vorstehend beschriebenen elektrischen Kontakten, verbunden.

Bei dem erfindungsgemäßen Verfahren erfolgt die vorstehend beschriebene Strukturierung in der Art, dass die strukturierte, transparente Beschichtung mindestens einen örtlich begrenzten, strukturierten, elektrisch beheizbaren, transparenten Bereich und mindestens einen elektrisch leitfähigen, transparenten Bereich aufweist, so dass bei Anlegen einer elektrischen Spannung zumindest durch den örtlich begrenzten, strukturierten, elektrisch beheizbaren, transparenten Bereich ein Strom fließt.

Die erfindungsgemäßen transparenten Gegenstände und die mithilfe des erfindungsgemäßen Verfahrens hergestellten transparenten Gegenstände, insbesondere die mithilfe des erfindungsgemäßen Verfahrens hergestellten erfindungsgemäßen Gegenstände, können weitere funktionale Schichten und weitere elektrisch isolierende, transparente Substrate enthalten.
Beispiele geeigneter funktionaler Schichten sind farbgebende Schichten, Schichten, die die strukturelle Festigkeit der erfindungsgemäßen Gegenstände steigern, Licht reflektierende Schichten und Antireflexionsschichten.

Insbesondere werden Schichten, die die strukturelle Festigkeit der erfindungsgemäßen Gegenstände steigern, verwendet. Dabei kann es sich um Haftschichten, Verbundfolien, mechanische Energie absorbierende Folien und selbst heilende Folien aus Gießharzen, wie härtbare Epoxidharze, oder um thermoplastische Kunststoffe, wie Polyvinylbutyral, PVB, Poly(ethylen-vinylacetat), EVA, Polyethylenterephthalat, PET, Polyvinylchlorid, PVC, lonomerharze auf der Basis von Ethylen und/oder Propylen und alpha,beta-ungesättigten Carbonsäuren oder Polyurethan, PU, wie sie beispielsweise aus der deutschen Übersetzung des europäischen Patents EP 0 847 965 B1 mit dem Aktenzeichen DE 697 31 2 168 T2, Seite 8, Absätze [0054] und [0055], oder den internationalen Patentanmeldungen WO 2005/042246 A1, WO 2006/034346 A1 und WO 2007/149082 A1 bekannt sind, handeln. Falls notwendig, können in diesen Schichten die Bereiche, die direkt über den örtlich begrenzten, strukturierten, elektrisch beheizbaren, transparenten Bereichen liegen, ausgespart werden.

Vorzugsweise handelt es sich bei den weiteren elektrisch isolierenden, transparenten Substraten um die vorstehend beschriebenen Substrate, insbesondere um Substrate aus Glas.

Vorzugsweise sind die weiteren elektrisch isolierenden, transparenten Substrate in ihrer Fläche und Form den erfindungsgemäßen Gegenständen angepasst, so dass sie mit diesen problemlos verbunden werden können.

Bevorzugt sind die resultierenden erfindungsgemäßen Gegenstände, die die zusätzlichen Schichten und/oder Substrate enthalten, so aufgebaut, dass die strukturierte, transparente Beschichtung jeweils im Innern der erfindungsgemäßen Gegenstände lokalisiert ist.

Im Rahmen der erfindungsgemäßen Verwendung werden die erfindungsgemäßen Gegenstände und die mithilfe des erfindungsgemäßen Verfahrens hergestellten, transparenten Gegenstände, insbesondere die mithilfe des erfindungsgemäßen Verfahrens hergestellten erfindungsgemäßen Gegenstände, mit Vorteil in Fortbewegungsmitteln für den Verkehr zu Lande, zur Luft und zu Wasser, vorzugsweise in Kraftfahrzeugen, wie Pkw, Lastkraftwagen und Zügen, in Luftfahrzeugen und in Schiffen sowie im Möbel-, Geräte- und Bausektor, bevorzugt als transparente Bauteile, verwendet.

Besonders bevorzugt werden die erfindungsgemäßen Gegenstände in der Form von Einscheiben-Sicherheitsglasscheiben und Verbundsicherheitsglasscheiben als Fensterscheiben in Fortbewegungsmitteln, insbesondere als Windschutzscheiben für Kraftfahrzeuge, speziell Pkw, als architektonische Bauteile im Bausektor, insbesondere für Überkopfverglasungen für Dächer, Glaswände, Fassaden, Fensterscheiben, Glastüren, Balustraden, Brüstungsverglasungen, Oberlichter oder begehbares Glas, sowie als Bauteile in Möbeln und Geräten, insbesondere in Kühlschränken und Tiefkühlvitrinen, eingesetzt.

Da die erfindungsgemäßen Einscheiben-Sicherheitsglasscheiben und Verbundsicherheitsglasscheiben örtlich begrenzte, mit niedriger Spannung elektrisch beheizbare, transparente Bereiche aufweisen, die frei von Abschattungen sind, sind sie nicht nur hervorragend als beschlagfreie Kamera- und Sensorfelder für den Durchlass von Informationen in der Form elektromagnetischer Strahlung von "außen nach innen" geeignet, sondern auch für den Durchlass von Informationen in der Form elektromagnetischer Strahlung von "innen nach außen". So wird beispielsweise ein Sensor zur Abstandsmessung im Innern eines Kraftfahrzeugs hinter einer erfindungsgemäßen Scheibe auch im Winter nicht in seiner Funktion beeinträchtigt. Umgekehrt bleibt der Blick auf ein Objekt, das sich hinter einer erfindungsgemäßen Scheibe, transparenten Kühlschranktür oder transparenten Vitrinentür befindet, wie z. B. eine Uhr oder ein Display, auch im Winter oder im Kältebetrieb ungetrübt.

Im Folgenden wird der erfindungsgemäße Gegenstand anhand der Figuren 1 bis 3 beispielhaft erläutert. Bei den Figuren 1 bis 3 handelt es sich um schematische Darstellungen, die das Prinzip der Erfindung veranschaulichen sollen. Die schematischen Darstellungen brauchen daher nicht maßstabsgetreu zu sein. Die dargestellten Größenverhältnisse müssen daher auch nicht den bei der Ausübung der Erfindung in der Praxis angewandten Größenverhältnissen entsprechen.
Figur 1 zeigt eine erste Alternative für die zweite Ausführungsform der Erfindung.
Figur 2 zeigt eine zweite Alternative für die zweite Ausführungsform der Erfindung.
Figur 3 zeigt eine Alternative für die erste Ausführungsform der Erfindung.

In den Figuren 1 bis 3 haben die Bezugszeichen die folgende Bedeutung:
(1) transparentes, elektrisch isolierendes Substrat,
(2) strukturierte, transparente Beschichtung,
(2.1) elektrisch leitfähiges Material,
(2.2) elektrisch isolierender Bereich,
(2.3) örtlich begrenzter, strukturierter, elektrisch beheizbarer, transparenter Bereich,
(2.3.1) mäanderförmige Leiterbahn,
(2.4) elektrisch leitfähiger, transparenter Bereich,
(2.4.1) elektrisch leitfähiger, transparenter Teilbereich,
(2.4.2) elektrisch leitfähiger, transparenter Teilbereich,
(3) elektrischer Kontakt,
(3.1) elektrische Kontaktbrücke,
(3.2) Spule und
(4) elektrisch isolierender Bereich.

Im Folgenden werden die erfindungsgemäßen Gegenstände der Figuren 1 bis 3 der Kürze halber als »erfindungsgemäße Gegenstände 1 bis 3« bezeichnet.

Bei den Substraten (1) der erfindungsgemäßen Gegenstände 1 bis 3 handelt es sich um Floatglasscheiben der Abmessungen, wie sie beispielsweise für Windschutzscheiben, Seitenscheiben und Rückscheiben im Fahrzeugbau, in kleinen, mittleren oder großflächigen Scheiben im Möbel-, Geräte- oder Bausektor verwendet werden. Die Abmessungen können mehrere Quadratzentimeter bis mehrere Quadratmeter betragen.

Bei den Beschichtungen (2) der erfindungsgemäßen Gegenstände 1 bis 3 handelt es sich jeweils um eine Beschichtung, wie sie in der der deutschen Übersetzung des europäischen Patents EP 0 847 965 B1 mit dem Aktenzeichen DE 697 31 2 168 T2, Beispiel 1, Seite 9, Absatz [0063], bis Seite 11, Absatz [0080], beschrieben wird. Diese Schicht enthält zwei Schichten aus Silber als elektrisch leitfähigem Material (2.1). In diese Schichten sind die zu den Leiterbahnen (2.3.1), dem Bereich (2.4) sowie den Teilbereichen (2.4.1) und (2.4.2) komplementären Bereiche (2.2) eingeschrieben.

Die Beschichtungen (2) der erfindungsgemäßen Gegenstände 1 bis 3 sind von einem elektrisch isolierenden Bereich (4) einer Breite im Bereich von 0,5 bis 10 cm umgeben.

Die elektrisch isolierenden Bereiche (2.2) der erfindungsgemäßen Gegenstände 1 bis 3 weisen eine Tiefe auf, die der Dicke der Beschichtungen (2) entspricht. Ihre Breite liegt im Bereich von 100 nm bis 5 mm.

Die örtlich begrenzten, strukturierten, elektrisch beheizbaren, transparenten Bereiche (2.3) der erfindungsgemäßen Gegenstände 1 bis 3 werden von jeweils einer mäanderförmigen Leiterbahn (2.3.1) einer Länge im Bereich von 10 cm bis 6 m und einer Breite im Bereich von 0,5 mm bis 10 cm sowie den hierzu komplementären elektrisch isolierenden Bereichen (2.2) gebildet.

Bei dem erfindungsgemäßen Gegenstand 3 ist der Bereich (2.3) von dem elektrisch leitfähigen, transparenten Bereich (2.4) elektrisch isoliert. Bei dieser Ausführungsform enthält der erfindungsgemäße Gegenstand 3 nur einen Bereich (2.4).

Bei den erfindungsgemäßen Gegenständen 1 und 2 stehen Eingang und Ausgang des jeweiligen Bereichs (2.3) in elektrischem Kontakt mit jeweils einem Teilbereich (2.4.1) oder (2.4.2), die durch einen Bereich (2.2) voneinander getrennt sind.

Bei dem erfindungsgemäßen Gegenstand 1 ist der eine direkte elektrische Kontakt (3) mit dem Teilbereich (2.4.1) verbunden, wogegen der andere direkte elektrische Kontakt (3) mit dem Teilbereich (2.4.2) verbunden ist. Bei Anlegen einer elektrischen Spannung von 12 bis 14 V fließt ein Strom durch die Leiterbahn (2.3.1), so dass sich der Bereich (2.3) auf 50°C erhitzt.

Der erfindungsgemäße Gegenstand (2) enthält einen induktiven elektrischen Kontakt (3), der eine Spule (3.2) und eine Kontaktbrücke (3.1) umfasst. Die Spule (3.2) ist mithilfe eines durchgehenden spiralförmigen Bereichs (2.2) in den Teilbereich (2.4.1) der Beschichtung (2) eingeschrieben. Die elektrische Kontaktbrücke befindet sich berührungsfrei oberhalb der Beschichtung (2) und reicht von der Mitte der Spule (3.2) bis in den Teilbereich (2.4.1). Bei Anlegen einer elektrischen Spannung von 12 bis 14 V fließt ein Strom durch die Leiterbahn (2.3.1), so dass sich der Bereich (2.3) auf 50°C erhitzt.

Bei dem erfindungsgemäßen Gegenstand 3 sind die direkten elektrischen Kontakte (3) derart an den Bereich (2.3) angeschlossen, dass bei Anlegen einer elektrischen Spannung von 12 bis 14 V ein elektrischer Strom durch die Leiterbahn (2.3.1) fließt, so dass sich der Bereich (2.3) auf 50°C erhitzt. Zu diesem Zweck befindet sich zwischen den beiden elektrischen Kontakten (3) ebenfalls ein Bereich (2.2) (nicht eingezeichnet).

## Patentansprüche

1. Transparenter Gegenstand, umfassend
- mindestens ein transparentes, elektrisch isolierendes Substrat (1),
- eine strukturierte, transparente Beschichtung (2), die
- mindestens ein elektrisch leitfähiges Material (2.1) enthält oder hieraus besteht,
- das transparente, isolierende Substrat (1) großflächig bedeckt,
- eine Struktur, die von elektrisch leitfähigem Material (2.1) freien, elektrisch isolierenden Bereichen (2.2) gebildet ist, aufweist und
- mindestens einen örtlich begrenzten, strukturierten, elektrisch beheizbaren, transparenten Bereich (2.3) und
- mindestens einen elektrisch leitfähigen, transparenten Bereich (2.4) umfasst, sowie
- elektrische Kontakte (3) zum Anlegen einer elektrischen Spannung an die Beschichtung (2), wobei
- die Beschichtung (2) derart strukturiert und die elektrischen Kontakte (3) derart angeschlossen sind, dass bei Anlegen einer Spannung zumindest durch den Bereich (2.3) ein Strom fließt,
**dadurch gekennzeichnet, dass** der Bereich (2.3) die Struktur einer mäanderförmigen Leiterbahn (2.3.1) hat.

2. Transparenter Gegenstand nach Anspruch 1, **dadurch gekennzeichnet, dass** der Bereich (2.3) von der Beschichtung (2.4) elektrisch isoliert und an elektrische Kontakte (3) angeschlossen ist.

3. Transparenter Gegenstand nach Anspruch 1, **dadurch gekennzeichnet, dass** sich der Bereich (2.3) in elektrischem Kontakt mit dem Bereich (2.4) befindet, wobei die elektrischen Kontakte (3) an die Beschichtung (2) außerhalb des Bereichs (2.3) angeschlossen sind.

4. Transparenter Gegenstand nach Anspruch 1 oder 3, **dadurch gekennzeichnet, dass** der Bereich (2.4) aus zwei Teilbereichen (2.4.1) und (2.4.2) besteht, von denen der eine Teilbereich mit dem elektrischen Eingang des Bereichs (2.3) und der andere Teilbereich mit dem elektrischen Ausgang des Bereichs (2.3) in Kontakt steht.

5. Transparenter Gegenstand nach einem der Ansprüche 1 bis 4, **dadurch gekennzeichnet, dass** die Leiterbahn (2.3.1) eine Breite von 0,5 mm bis 10 cm hat.

6. Transparenter Gegenstand nach einem der Ansprüche 1 bis 5, **dadurch gekennzeichnet, dass** die Leiterbahn (2.3.1) eine Länge von 10 cm bis 6 m hat.

7. Transparenter Gegenstand nach einem der Ansprüche 1 bis 6, **dadurch gekennzeichnet, dass** die Beschichtung (2) eine einheitliche Schichtdicke von 50 nm bis 100 µm hat.

8. Transparenter Gegenstand nach einem der Ansprüche 1 bis 7, **dadurch gekennzeichnet, dass** die Beschichtung (2) mindestens eine Schicht aus einem elektrisch leitfähigen Material (2.1) enthält oder hieraus besteht.

9. Transparenter Gegenstand nach einem der Ansprüche 1 bis 8, **dadurch gekennzeichnet, dass** die Bereiche (2.2) eine Breite von 100 nm bis 5 mm aufweisen.

10. Transparenter Gegenstand nach einem der Ansprüche 1 bis 9, **dadurch gekennzeichnet, dass** die Beschichtung (2) von einem elektrisch isolierenden Bereich (4), der frei von elektrisch leitfähigem Material (2.1) ist, umgeben ist.

11. Transparenter Gegenstand nach einem der Ansprüche 1 bis 10, **dadurch gekennzeichnet, dass** die elektrischen Kontakte (3) direkte Kontakte oder induktive Kontakte sind.

12. Verfahren zur Herstellung eines transparenten Gegenstands nach einem der Ansprüche 1 bis 11, wobei
(I) mindestens ein elektrisch leitfähiges Material (2.1) großflächig auf ein transparentes, elektrisch isolierendes Substrat (1) appliziert wird, so dass eine transparente, elektrisch leitfähige Beschichtung (2) resultiert, die das Material (2.1) enthält oder hieraus besteht,
(II) die Beschichtung (2) strukturiert, indem man sie stellenweise entfernt, so dass elektrisch isolierende Bereiche (2.2) resultieren, die frei von elektrisch leitfähigem Material (2.1) sind, und
(III) die strukturierte Beschichtung (2) mit elektrischen Kontakten (3) verbindet,
**dadurch gekennzeichnet, dass**
die Strukturierung (II) derart erfolgt, dass
- die strukturierte Beschichtung (2) mindestens einen örtlich begrenzten, strukturierten, elektrisch beheizbaren, transparenten Bereich (2.3) und mindestens einen elektrisch leitfähigen, transparenten Bereich (2.4) aufweist und
- bei Anlegen einer elektrischen Spannung zumindest durch den Bereich (2.3) ein Strom fließt.

13. Verfahren nach Anspruch 12, **dadurch gekennzeichnet, dass** das elektrisch leitfähige Material (2.1) mechanisch, thermisch und/oder durch Bestrahlung mit elektromagnetischer Strahlung entfernt wird.

14. Verwendung des transparenten Gegenstands gemäß einem der Ansprüche 1 bis 11 und des mithilfe des Verfahrens gemäß einem der Ansprüche 12 oder 13 hergestellten transparenten Gegenstands in Fortbewegungsmitteln für den Verkehr zu Lande, zur Luft und zu Wasser sowie im Möbel-, Geräte- und Bausektor.

## Claims

1. Transparent object, comprising
- at least one transparent, electrically insulating substrate (1),
- a structured, transparent coating (2) that
- includes or is made of at least one electrically conducting material (2.1),
- covers a large area of the transparent, insulating substrate (1),
- has a structure that is formed from electrically insulating areas (2.2) free of electrically conducting material (2.1), and
- has at least one locally limited, structured, electrically heatable, transparent area (2.3) and
- has least one electrically conducting, transparent area (2.4) as well as
- electrical contacts (3) for applying an electrical voltage to the coating (2), wherein
- the coating (2) is structured such that and the electrical contacts (3) are connected such that upon application of a voltage, a current flows at least through the area (2.3),
**characterized in that** the area (2.3) has the structure of a meandering strip conductor (2.3.1).

2. Transparent object according to claim 1, **characterized in that** the area (2.3) is electrically isolated from the coating (2.4) and is connected to electrical contacts (3).

3. Transparent object according to claim 1, **characterized in that** the area (2.3) is in electrical contact with the area (2.4), wherein the electrical contacts (3) are connected to the coating (2) outside the area (2.3).

4. Transparent object according to claim 1 or 3, **characterized in that** the area (2.4) comprises two subareas (2.4.1) and (2.4.2), of which one subarea is in contact with the electrical input of the area (2.3) and the other subarea is in contact with the electrical output of the area (2.3).

5. Transparent object according to one of claims 1 through 4, **characterized in that** the strip conductor (2.3.1) has a width of 0.5 mm to 10 cm.

6. Transparent object according to one of claims 1 through 5, **characterized in that** the strip conductor (2.3.1) has a length of 10 cm to 6 m.

7. Transparent object according to one of claims 1 through 6, **characterized in that** the coating (2) has a uniform layer thickness of 50 nm to 100 µm.

8. Transparent object according to one of claims 1 through 7, **characterized in that** the coating (2) includes or is made of at least one layer of an electrically conducting material (2.1).

9. Transparent object according to one of claims 1 through 8, **characterized in that** the areas (2.2) have a width of 100 nm to 5 mm.

10. Transparent object according to one of claims 1 through 9, **characterized in that** the coating (2) is surrounded by an electrically insulating area (4) that is free of electrically conducting material (2.1).

11. Transparent object according to one of claims 1 through 10, **characterized in that** the electrical contacts (3) are direct contacts or inductive contacts.

12. Method for producing a transparent object according to one of claims 1 through 11, wherein
(I) at least one electrically conducting material (2.1) is applied over a large area on a transparent, electrically insulating substrate (1) such that a transparent, electrically conducting coating (2) that includes or is made of the material (2.1) results,
(II) the coating (2) is structured, in that it is removed in places such that electrically insulating areas (2.2) that are free of electrically conducting material (2.1) result, and
(III) the structured coating (2) is connected to electrical contacts (3),
**characterized in that**
the structuring (II) is done such that
- the structured coating (2) has at least one locally limited, structured, electrically heatable, transparent area (2.3) and at least one electrically conducting, transparent area (2.4), and
- upon application of an electrical voltage, a current flows at least through the area (2.3).

13. Method according to claim 12, **characterized in that** the electrically conducting material (2.1) is removed mechanically, thermally, and/or by irradiation with electromagnetic radiation.

14. Use of the transparent object according to one of claims 1 through 11 and of the transparent object produced using the method according to one of claims 12 or 13 in means of transportation for travel on land, in the air, and on water as well as in the furniture, equipment, and construction sector.

## Revendications

1. Objet transparent, comprenant :
- au moins un substrat (1) électriquement isolant, transparent ;
- un revêtement (2) transparent, structuré, lequel :
- contient au moins une matière (2.1) conductrice de l'électricité ou est composé de celle-ci ;
- recouvre sur une grande surface le substrat (1) isolant, transparent ;
- présente une structure qui est formée de zones (2.2) électriquement isolantes, exemptes de matière (2.1) conductrice de l'électricité ; et
- comprend au moins une zone (2.3) transparente, apte à être chauffée électriquement, structurée, limitée dans l'espace ; et
- au moins une zone (2.4) transparente, conductrice de l'électricité,
ainsi que :
- des contacts électriques (3) destinés à appliquer une tension électrique au revêtement (2), où
- le revêtement (2) est structuré de telle sorte que et les contacts électriques (3) sont raccordés de telle sorte que, lors de l'application d'une tension, un courant circule au moins à travers la zone (2.3),
**caractérisé par le fait que** la zone (2.3) a la structure d'une piste conductrice (2.3.1) formant des méandres.

2. Objet transparent selon la revendication 1, **caractérisé par le fait que** la zone (2.3) est isolée électriquement du revêtement (2.4) et est raccordée à des contacts électriques (3).

3. Objet transparent selon la revendication 1, **caractérisé par le fait que** la zone (2.3) se trouve en contact électrique avec la zone (2.4), les contacts électriques (3) étant raccordés au revêtement (2) à l'extérieur de la zone (2.3).

4. Objet transparent selon l'une des revendications 1 ou 3, **caractérisé par le fait que** la zone (2.4) est composée de deux zones partielles (2.4.1) et (2.4.2), l'une desdites zones partielles étant en contact avec l'entrée électrique de la zone (2.3) et l'autre zone partielle étant en contact avec la sortie électrique de la zone (2.3).

5. Objet transparent selon l'une des revendications 1 à 4, **caractérisé par le fait que** la piste conductrice (2.3.1) a une largeur de 0,5 mm à 10 cm.

6. Objet transparent selon l'une des revendications 1 à 5, **caractérisé par le fait que** la piste conductrice (2.3.1) a une longueur de 10 cm à 6 m.

7. Objet transparent selon l'une des revendications 1 à 6, **caractérisé par le fait que** le revêtement (2) a une épaisseur de couche uniforme de 50 nm à 100 µm.

8. Objet transparent selon l'une des revendications 1 à 7, **caractérisé par le fait que** le revêtement (2) contient au moins une couche faite d'une matière (2.1) conductrice de l'électricité ou est composé de celle-ci.

9. Objet transparent selon l'une des revendications 1 à 8, **caractérisé par le fait que** les zones (2.2) présentent une largeur de 100 nm à 5 mm.

10. Objet transparent selon l'une des revendications 1 à 9, **caractérisé par le fait que** le revêtement (2) est entouré d'une zone (4) électriquement isolante, laquelle est exempte de matière (2.1) conductrice de l'électricité.

11. Objet transparent selon l'une des revendications 1 à 10, **caractérisé par le fait que** les contacts électriques (3) sont des contacts directs ou des contacts inductifs.

12. Procédé de fabrication d'un objet transparent selon l'une des revendications 1 à 11, dans lequel :
(I) au moins une matière (2.1) conductrice de l'électricité est appliquée sur une grande surface sur un substrat (1) électriquement isolant, transparent, de telle sorte qu'il en résulte un revêtement (2) conducteur de l'électricité, transparent, qui contient la matière (2.1) ou est composé de celle-ci ;
(II) le revêtement (2) est structuré par le fait qu'on l'enlève par endroits de telle sorte qu'il en résulte des zones (2.2) électriquement isolantes, lesquelles sont exemptes de matière (2.1) conductrice de l'électricité ; et
(III) le revêtement structuré (2) est relié à des contacts électriques (3),
**caractérisé par le fait que**,
la structuration (II) a lieu de telle sorte que :
- le revêtement structuré (2) présente au moins une zone (2.3) transparente, apte à être chauffée électriquement, structurée, limitée dans l'espace, et au moins une zone (2.4) transparente, conductrice de l'électricité ; et
- lors de l'application d'une tension électrique, un courant circule au moins à travers la zone (2.3).

13. Procédé selon la revendication 12, **caractérisé par le fait que** la matière (2.1) conductrice de l'électricité est enlevée mécaniquement, thermiquement et/ou par irradiation par un rayonnement électromagnétique.

14. Utilisation de l'objet transparent selon l'une des revendications 1 à 11 et de l'objet transparent obtenu par le procédé selon l'une des revendications 12 ou 13 dans des moyens de locomotion pour le transport par terre, par air et par eau ainsi que dans le secteur de l'ameublement, de l'outillage et de la construction.
